(19) Europäisches Patentamt
European Patent Office
Office européen des brevets

(11) **EP 4 708 653 A1**

(12) **EUROPEAN PATENT APPLICATION**

(43) Date of publication:
**11.03.2026 Bulletin 2026/11**

(21) Application number: **25195304.8**

(22) Date of filing: **12.08.2025**

(51) International Patent Classification (IPC):
***H02M 1/00*** *(2006.01)* ***H02M 3/07*** *(2006.01)*
***H02M 3/158*** *(2006.01)*

(52) Cooperative Patent Classification (CPC):
**H02M 1/007; H02M 1/0095; H02M 3/07; H02M 3/158; H02M 3/1584;** H02M 3/072

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **29.08.2024 US 202418819847**

(71) Applicant: **Avago Technologies International Sales Pte. Limited**
**Singapore 768923 (SG)**

(72) Inventors:
- **Walley, John**
  **Ladera Ranch, CA 92694 (US)**
- **Rahman, Ashfaqur**
  **Timnath, CO 80547 (US)**

(74) Representative: **Grünecker Patent- und Rechtsanwälte PartG mbB**
**Leopoldstraße 4**
**80802 München (DE)**

(54) **INPUT INDUCTOR BUCK CONVERTER**

(57) A device includes a supply-side converter and a load-side converter. The supply-side converter receives an input voltage from a power source and adjusts the input voltage from a source level to an intermediate level. The supply-side converter outputs the input voltage into an inductor in the form of an intermediate voltage. The load-side converter receives the intermediate voltage from the inductor and adjusts the intermediate voltage from the intermediate level to a load voltage level. The load-side converter outputs the intermediate voltage to a power load in the form of a load voltage.

**FIG. 2**

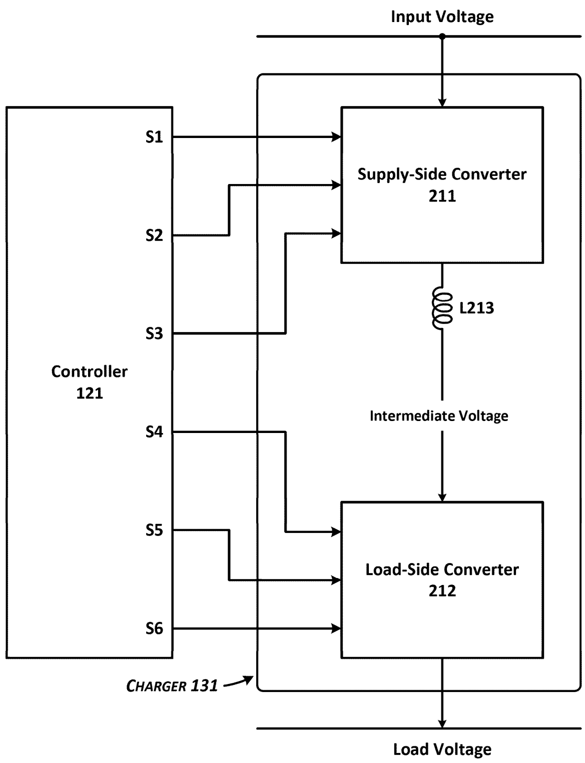


EP 4 708 653 A1

## Description

## BACKGROUND

Electronic devices from different manufacturers can output and receive a transfer of power in in numerous ways. While in operation, these devices consume an amount of power.

## BRIEF DESCRIPTION OF DRAWINGS

The accompanying drawings, which are incorporated in and form a part of this specification, illustrate examples of the disclosure and, together with the description, explain principles of the examples.

FIG. 1 illustrates an example device, in accordance with one or more embodiments of the disclosure.

FIG. 2 illustrates an example charger, in accordance with one or more embodiments of the disclosure.

FIG. 3 illustrates downstream power delivery, in accordance with one or more embodiments of the disclosure.

FIGS. 4A-4B illustrate an example charger, in accordance with one or more embodiments of the disclosure.

FIGS. 5A-5C illustrate example charger switching, in accordance with one or more embodiments of the disclosure.

FIGS. 6A-6B illustrate an example charger, in accordance with one or more embodiments of the disclosure.

FIG. 7 illustrates upstream power delivery, in accordance with one or more embodiments of the disclosure.

FIGS. 8A and 8B illustrate an example charger, in accordance with one or more embodiments of the disclosure.

FIG. 9 illustrates an example charger, in accordance with one or more embodiments of the disclosure.

FIGS. 10A-10B illustrate an example charger, in accordance with one or more embodiments of the disclosure.

FIG. 11 illustrates a comparative charger arrangement.

In the drawings, like reference symbols and numerals indicate the same or similar components. Like elements in the various figures are denoted by like reference symbols and numerals for consistency. Unless otherwise indicated, like elements and method steps are referred to with like reference numerals.

## DETAILED DESCRIPTION OF THE INVENTION

The following describes technical solutions in this specification with reference to the accompanying drawings. Exemplary embodiments are described in detail with reference to the accompanying drawings.

The terminology used herein is for describing various examples only, and is not to be used to limit the disclosure. Unless otherwise defined, all terms, including technical and scientific terms, used herein have the same meaning as commonly understood by one of ordinary skill in the art to which this disclosure pertains and after an understanding of the disclosure of this application.

Terms, such as those defined in commonly used dictionaries, are to be interpreted as having a meaning that is consistent with their meaning in the context of the relevant art and the disclosure of this application. Although the present technology has been described by referring to certain examples, workers skilled in the art will recognize that changes may be made in form and detail without departing from the scope of the discussion.

In an electronic device, power loss can arise from a complex interplay of various factors that can impact the battery life of the electronic device. These factors can include power loss due to cumulative resistive losses, leakage currents and other types of circuit power loss. According, there is a need in the art for an improved electronic device.

FIG. 1 illustrates an example device 100 in which aspects of the present disclosure may be implemented. Device 100 may include resistor Rsns, bidirectional converter 102, current regulator 103, voltage regulator 104, controller 121, charger 131 and energy storage device 141. Those skilled in the art will appreciate there may be additional components in device 100. In some examples, an integrated circuit chip may include bidirectional converter 102, current regulator 103, voltage regulator 104 and resistor Rsns. Another integrated circuit chip may include charger 131.

Device 100 may be configured as any type of electrically-powered device that has computing capability. For example, device 100 may be configured as a mobile communication device including, but not limited to, a mobile phone, a smart phone, cell phone, or tablet. Device 100 may be configured as a wearable device, a smartwatch, a fitness tracker or a personal digital assistant (PDA) and/or any portable electronic device that can be carried by or worn on a person. In some examples, device 100 may be found in apparatuses such as autonomous vehicles, robots and drones. In other examples, device 100 may be configured as a media device (e.g., media playing and/or recording device). Device 100 may include a portable music player, an audio device such as an audio recorder, an audio converter, an audio player, or a speaker (e.g., a Bluetooth-enabled speaker). In some examples, device 100 may include a video device such as a video display, a video recorder, a camera, or other video device. In other examples, device 100 may be configured as, a driver assistance module in a vehicle, an emergency transponder, a pager, a satellite television receiver, a stereo receiver, a computer system, music player, laptop or tablet computer, home appliance, or virtually any other device. Device 100 may be configured as a computer (e.g., a laptop computer). Device 100 may be configured as a computing and/or entertainment device for a vehicle.

Controller 121 is electronic hardware implemented as any suitable processing circuitry. The processing circuitry may include, but not limited to at least one of a microcontroller, a microprocessor, a single processor, and a multiprocessor. Controller 121 may include at least one of an embedded controller (EC), a central processing unit (CPU), an accelerated processing unit (APU), an application specific integrated circuit (ASIC), field programmable gate arrays (FPGA), control logic, a state machine, programmable processor, or the like. Controller 121 may be implemented as electronic hardware that includes digital circuits, analog circuits or a combination of both digital and analog circuits. Analog circuits may include analog components that are suitable to process analog signals. Digital circuits may include switches and gates that are suitable to process digital signals.

Controller 121 may control protective features for device 100. Protective features may include but not limited to overvoltage protection, overcurrent protection, short-circuit protection and temperature protection. In response to controller 121 performing overvoltage protection, controller 121 may detect momentary voltage increases such as voltage spikes. Controller 121 may disconnect or reroute power in response to detecting a momentary voltage increase. A short circuit in device 100 may cause overheating of device 100. Controller 121, in response to performing short-circuit protection as a protective feature, may detect the short circuit and cause a disconnection of power upon detecting the short circuit. Controller 121 may monitor the operating temperature of device 100. In response to device 100 overheating, controller 121 may regulate performance aspects of device 100 the reduce the operating temperature of device 100.

Illustrated in FIG. 2 is an example charger 131, which may include supply-side converter 211 in series with load-side converter 212. Inductor 213 is wired between supply-side converter 211 and load-side converter 212. In some instances, capacitive converter 211 may include inductor 213. Load-side converter 212 may include inductor 213 in other instances. Controller 121 may provide signaling on signal lines S1-S6 that configure supply-side converter 211 and load-side converter 212.

As will be explained in detail, controller 121 may configure supply-side converter 211 as either a buck converter or a boost converter in response to supplying signaling on signal lines S1-S3 to supply-side converter 211. Supply-side converter may adjust an input voltage from a source level to an intermediate level. The input voltage may be a regulated voltage (Vreg) in response to charger 131 receives regulated voltage (Vreg) from voltage regulator 104. In response to supply-side converter adjusts the input voltage from the source level to the intermediate level, the supply-side converter may output the input voltage into inductor L213 in the form of an intermediate voltage.

Controller 121 may configure load-side converter 212 as either a buck converter or a boost converter in response to supplying signaling on signal lines S4-S6 to load-side converter 212. Those skilled in the art will appreciate that other signals in addition to signaling on signal lines S1-S6 may provide signaling between supply-side converter 211, load-side converter 212 and controller 121. Load-side converter 212 may adjust intermediate voltage from the intermediate level to load voltage level in response to load-side converter 212 receives the intermediate voltage from inductor L213. In response to load-side converter 212 adjusting the intermediate voltage, load-side converter 212 may output a load voltage to a power load.

FIG. 3 illustrates a system that may include device 100 and external apparatus 310. Device 100 is removably connectable to external apparatus 310 and may also exchange information between external apparatus 310. Device 100 may serve as a receptor of downstream power from external apparatus 310. FIG. 3 illustrates device 100 configured for downstream power reception.

In the example of FIG. 3, bidirectional converter 102 may receive downstream power from external apparatus 310 wirelessly or by wire. The downstream power may be in the form of AC (alternating current) power and/or DC (direct current) power. Bidirectional converter 102 is circuitry that may rectify the downstream power to produce a rectified voltage (Vrect). Rectified voltage (Vrect) is a DC voltage. In response to producing rectified voltage (Vrect), bidirectional converter 102 may transform the downstream power into rectified voltage (Vrect). Bidirectional converter 102 may be a power source in response to receiving the downstream power.

During the example of FIG. 3, controller 121 may cause current regulator 103 to function as a current meter that samples current (I-sns) flowing through resistor Rsns. In various embodiments, current regulator 103 may also function as a current sink that flows, to ground, a portion of current (I-sns) flowing through resistor Rsns. The resistance of resistor Rsns being 20 mΩ or less ensures that a significant amount of current (I-sns) may flow through resistor Rsns without degrading the performance characteristics of bidirectional converter 102. Based on the result of sampling the current (I-sns), current regulator 103 may flow a requisite amount of current to ground. The requisite amount during the downstream mode is an amount of current sufficient to safeguard against rectified voltage (Vrect) in bidirectional converter 102 falling below a predetermined threshold during the downstream mode.

Voltage regulator 104 is circuitry that may convert rectified voltage (Vrect) into a regulated voltage (Vreg) and output regulated voltage (Vreg) to charger 131. Regulated voltage (Vreg) is a DC voltage. In response to converting rectified voltage (Vrect) into regulated voltage (Vreg), voltage regulator 104 may maintain regulated voltage (Vreg) at a constant voltage level despite any fluctuation in rectified voltage (Vrect).

Charger 131, which is downstream from voltage regulator 104, is circuitry that may perform DC-to-DC conversion on regulated voltage (Vreg). In response to performing the DC-to-DC conversion, charger 131 may transform regulated voltage (Vreg) into an adjusted DC voltage (Vout). The adjusted DC voltage (Vout) is a DC voltage having a voltage level lower than the voltage level for regulated voltage (Vreg). Charger 131 may perform charging of energy storage device 141. Energy storage device 141 may include a battery and/or a battery pack. In response to charging energy storage device 141, charger 131 may store the adjusted DC voltage (Vout) into energy storage device 141. Energy storage device 141 may be the power load in the example of FIG. 3.

The example of FIGS. 4A and 4B illustrates a downstream configuration for charger 131 during the downstream mode. While in the downstream mode, controller 121 may configure inductive converter 211 and capacitive converter 212 in charger 131 as buck converters that are connected in series with one another. A buck converter, also known as a step-down converter, is circuitry that may reduce a higher-level voltage to a lower-level voltage while concurrently increasing the current of the lower-level voltage to an amount greater than a current associated with the higher-level voltage. Each buck converter 211, 212 in FIGS. 4A and 4B may temporarily store a voltage and then release the stored voltage to the output of the buck converter 211, 212 at a different voltage.

The downstream configuration for charger 131 may include inductive converter 211 in series with capacitive converter 212. The input of inductive converter 211 may receive regulated voltage (Vreg) from voltage regulator 104. Inductive converter 211 is a specific type of DC-DC converter that stores electrical energy in a magnetic field of an inductor in response to stepping down regulated voltage (Vreg) to a buck voltage (Vbuck). Buck voltage (Vbuck) is an intermediate voltage in the example of FIGS. 4A and 4B.

Inductive converter 211 may step down regulated voltage (Vreg) to buck voltage (Vbuck) and output buck voltage (Vbuck) to capacitive converter 212. The voltage level of buck voltage (Vbuck) is lower than the voltage level of regulated voltage (Vreg). An intermediate level in the example of FIGS. 4A - 5C is the voltage level of buck voltage (Vbuck).

The input of capacitive converter 212 may receive buck voltage (Vbuck) from the output of inductive converter 211. Capacitive converter 212, which may also be known as a switched capacitor converter, is a specific type of DC-DC converter that stores electrical energy in a capacitor in response to stepping down the buck voltage (Vbuck) to the adjusted DC voltage (Vout). The voltage level of adjusted DC voltage (Vout) is lower than the voltage level of buck voltage (Vbuck).

Controller 121 may provide, in control gate signals (CTL), signaling on signal lines S1-S5 that configure the overall operations of inductive converter 211 and capacitive converter 212. Signaling on signal lines S1-S2 may configure inductive converter 211 and signaling on signal lines S3-S5 may configure capacitive converter 212. Those skilled in the art will also appreciate that other gate signals in addition to signaling on signal lines S1-S5 may provide signaling between controller 121, inductive converter 211 and capacitive converter 212.

A schematic diagram for the downstream configuration of charger 131 is illustrated in FIG. 4B. Along with controller 121, the downstream configuration may include five switches (transistors Q1 - Q5), L213 (an inductor), C1 (a flying capacitor) and C2 (a shunt capacitor). The transistors Q1 - Q5 may be implemented as n-type metal-oxide-semiconductor (NMOS) transistors. Alternatively, any of the transistors Q1 - Q5 may be implemented as a Field Effect Transistor (FET), a bipolar transistor, a p-type metal-oxide-semiconductor (PMOS) transistor, or any other switching device.

As illustrated in FIG. 4B, inductive converter 211 may include transistor Q1, transistor Q2 and inductor L213. Capacitive converter 212 may include transistor Q3, transistor Q4, transistor Q5, flying capacitor C1 and shunt capacitor C2. The flying capacitor C1 and shunt capacitor C2 may be components of electronic circuitry 151.

The drain of transistor Q1 may be coupled to the output of voltage regulator 104. In response to being coupled to the output of voltage regulator 104, the drain of transistor Q1 may receive regulated voltage (Vreg) from voltage regulator 104. The source of transistor Q1 may be coupled to the drain transistor Q2. Via node N1, a first terminal of inductor L213 may be coupled to the source of transistor Q1 and the drain transistor Q2. The source of transistor Q2 may be coupled to ground.

A second terminal of inductor L213 may be coupled to the drain of transistor Q3. In response to being coupled to the second terminal of inductor L213, the drain of transistor Q3 may receive buck voltage (Vbuck) from the inductor L213.

The source of transistor Q3 may be coupled to the drain of transistor Q4. The source of transistor Q4 may be coupled to the drain of transistor Q5. The source of transistor Q5 may be coupled to ground. Via node CBOT, the first terminal of flying capacitor C1 may be coupled to the source of transistor Q4 and the drain of transistor Q5. Via node CTOP, the second terminal of flying capacitor C1 may be coupled to the drain of transistor Q3 and the second terminal of inductor L213. Node VSW may be coupled to the source of transistor Q3 and the drain transistor Q4. Adjusted DC voltage (Vout) may appear at node VSW. A first terminal of shunt capacitor C2 may be coupled to node VSW and a second terminal of shunt capacitor C2 may be coupled to ground.

Illustrated in the example of FIGS. 5A-5C, controller 121 may configure charger 131 to adjust a voltage level of adjusted DC voltage (Vout) as a function of the voltage level of regulated voltage (Vreg). Specifically, controller 121 may configure charger 131 to modify the voltage level ratio of regulated voltage (Vreg) to adjusted DC voltage (Vout) in response to controlling signaling on signal lines S1-S5. In such instances, controller 121 may change signaling on signal lines S1-S5 depending on the voltage levels of regulated voltage (Vreg) and adjusted DC voltage (Vout).

For example, configuration A in FIG. 5A illustrates an example where signaling on signal lines S1-S5 to inductive converter 211 and capacitive converter 212 may include signals P1 and P2, which are out of phase from one another. In this example, the voltage level ratio of regulated voltage (Vreg) to adjusted DC voltage (Vout) may be around 2 to 3.

Configuration B in FIG. 5B illustrates an example where signal lines S1-S2 to inductive converter 211 receive signals P1 and P2, respectively. Signaling for capacitive converter 212 may include logic 1 at the gate of transistors Q3, Q5 and logic 0 at the gate of transistor Q4. In this example, the voltage level ratio of regulated voltage (Vreg) to adjusted DC voltage (Vout) may be around 1.

Configuration C in FIG. 5C illustrates an example where signaling for inductive converter 211 may include logic 1 at the gate of transistor Q1 and logic 0 at the gate of transistor Q2. Signal lines S4-S6 of capacitive converter 212 may receive signals P1 and P2, respectively. In this example, the voltage level ratio of regulated voltage (Vreg) to adjusted DC voltage (Vout) may be around 1.5.

Illustrated in FIGS. 6A and 6B, charger 131 may include three converters wired in series. The first of the three converters may include input capacitor C621, flying capacitor C622, shunt capacitor C623, inductor L624 and switches Q61 - Q64. Inductor L624 is optional and may be omitted. The second of the three converters may include switches Q65 - Q68, flying capacitor C625 and inductor L626. Inductor L626 is optional and may be omitted. The third of the three converters may include switches Q69 - Q612, flying capacitor C627, shunt capacitor C628 and inductor L629. Inductor L629 is optional and may be omitted. Switches Q61 - Q612 may be implemented as n-type metal-oxide-semiconductor (NMOS) transistors. Alternatively, any of the switches Q61 - Q612 may be implemented as a Field Effect Transistor (FET), a bipolar transistor, a p-type metal-oxide-semiconductor (PMOS) transistor, or any other switching device. Signal lines S1-S12 from controller 121 may be coupled to gate electrodes of switches Q61 - Q612.

The example of FIG. 6A illustrates the three converters wired in series resulting from a topology having terminal of inductor L624 coupled to the drain of switch Q65 and terminal of inductor L626 coupled to the drain of switch Q611.

The example of FIG. 6B illustrates the three converters wired in parallel resulting from a topology having terminal of inductor L624 coupled to the drain of switch Q65 and the drain of switch Q69.

Controller 121 may output, onto signal lines S1-S12, signaling that configures each of the three converters in FIGS. 6A and 6B as a buck converter. For example, signaling on signal lines S1-S4 may configure the first of the three converters as a first buck converter, signaling on signal lines S5-S8 may configure the second of the three converters as a second buck converter, and signaling on signal lines S9-S12 may configure the third of the three converters as a third buck converter.

FIG. 7 illustrates a system that may include device 100 and external apparatus 710. Device 100 is removably connectable to external apparatus 710 and may also exchange information between external apparatus 710. In the example of FIG. 7, device 100 may serve as the power source for upstream power to external apparatus 710. The upstream power may be in the form of AC power and/or DC power. Device 100 may supply upstream power to external apparatus 710 wirelessly or by wire. Those skilled in the art will appreciate that in cases where device 100 serves as the power source, device 100 may function as a host for powering peripheral devices such as headphones, keyboards, displays and/or other electronic devices.

The example of FIGS. 8A and 8B illustrates an upstream configuration for charger 131 during an upstream mode. While in the upstream mode, controller 121 may configure inductive converter 211 and capacitive converter 212 in charger 131 as boost converters that are connected in series with one another. A boost converter, also known as a step-up converter, is circuitry that may increase a lower-level voltage to a higher-level voltage while concurrently increasing the current of the higher-level voltage to an amount less than a current associated with the lower-level voltage.

Controller 121 may provide, in control gate signals (CTL), signaling on signal lines S1-S5 that configure the overall operations of inductive converter 211 and capacitive converter 212. Signaling on signal lines S1-S2 may configure inductive converter 211. Signaling on signal lines S3-S5 may configure capacitive converter 212. Those skilled in the art will also appreciate that other gate signals in addition to signaling on signal lines S1-S3 may provide signaling between controller 121. Configured as boost converters in the example of FIGS. 8A and 8B, inductive converter 211 and capacitive converter 212 may each temporarily store a voltage and then release the stored voltage to the output at a different voltage.

As illustrated in FIG. 8B, inductive converter 211 may include transistor Q1, transistor Q2 and inductor L213. Capacitive converter 212 may include transistor Q3, transistor Q4, transistor Q5, flying capacitor C1 and shunt capacitor C2. The flying capacitor C1 and the shunt capacitor C2 may be components of electronic circuitry 151. The drain of transistor Q1 may be coupled to the output of voltage regulator 104. In response to being coupled to the output of voltage regulator 104, the drain of transistor Q1 may deliver supply voltage (Vdd) to voltage regulator 104 during upstream power delivery. The source of transistor Q1 may be coupled to the drain transistor Q2. Via node N1, a first terminal of inductor L213 may be coupled to the source of transistor Q1 and the drain transistor Q2. The source of transistor Q2 may be coupled to ground.

A second terminal of inductor L213 may be coupled to the drain of transistor Q3. In response to being coupled to the second terminal of inductor L213, the drain of transistor Q3 may deliver boost voltage (Vboost) through the inductor L213 to the N1 node of the converter 211. Boost voltage (Vboost) is an intermediate voltage in the example of FIGS. 8A and 8B. The voltage level of boost voltage (Vboost) is higher than the voltage level of electrical energy (Vbatt). The source of transistor Q3 may be coupled to the drain of transistor Q4. The source of transistor Q4 may be coupled to the drain of transistor Q5 and the source of transistor Q5 may be coupled to ground. Via node CBOT, the first terminal of flying capacitor C1 may be coupled to the source of transistor Q4 and the drain of transistor Q5. Via node CTOP, the second terminal of flying capacitor C1 may be coupled to the drain of transistor Q3 and the second terminal of inductor L213. Node VSW may be coupled to the source of transistor Q3 and the drain transistor Q4. Supply voltage (Vdd) may appear at node VSW. Supply voltage (Vdd) is a DC voltage. The voltage level of supply voltage (Vdd) is higher than the voltage level of boost voltage (Vboost). A first terminal of shunt capacitor C2 may be coupled to node VSW and a second terminal of shunt capacitor C2 may be coupled to ground.

In response to controlling signaling on signal lines S1-S5, controller 121 may configure charger 131 to modify the voltage level ratio of electrical energy (Vbatt) to supply voltage (Vdd). In these instances, controller 121 may change signaling on signal lines S1-S5 depending on the voltage levels of electrical energy (Vbatt) and supply voltage (Vdd).

The example of FIG. 9 illustrates a schematic diagram for charger 131. Charger 131 may include four switches (transistors Q91 - Q94). The transistors Q91 - Q94 may be implemented as n-type metal-oxide-semiconductor (NMOS) transistors. Alternatively, any of the transistors Q91 - Q94 may be implemented as a Field Effect Transistor (FET), a bipolar transistor, a p-type metal-oxide-semiconductor (PMOS) transistor, or any other switching device. Charger 131 may also include L91 (an inductor), C91 (a shunt capacitor) and C92 (a flying capacitor).

Controller 121 may configure charger 131 as a boost converter during an upstream mode. A boost converter, also known as a step-up converter, is circuitry that may increase a lower-level voltage to a higher-level voltage while concurrently increasing the current of the higher-level voltage to an amount less than a current associated with the lower-level voltage. Inductor L91, shunt capacitor C91 and flying capacitor C92 may be components of electronic circuitry 151.

A terminal of shunt capacitor C91 may be coupled to a terminal of inductor L91 and another terminal of shunt capacitor C91 may be coupled to ground. The drain of transistor Q91 may be coupled to another terminal of inductor L91. Via node CTOP, the source of transistor Q91 may be coupled to the terminal of flying capacitor C92 and the drain of transistor Q92. Node VSW may be coupled to the source of transistor Q92 and the drain transistor Q93. Electrical energy (Vbatt) that is stored in energy storage device 141 may appear at node VSW. Via node CBOT, another terminal of flying capacitor C92 may be coupled to the source of transistor Q93 and the drain of transistor Q94. The source of transistor Q94 may be coupled to ground.

FIG. 9 illustrates an example where signals S91-S94 may exist during sequential time periods T0-TN, with "N" being an integer greater than 1. Signaling on signal line S91 for charger 131 may include logic 1 at the gate of transistor Q91. Same signals S92 and S94 may appear at transistors Q92 and Q94. Signal S93 may be out of phase from signals S92 and S94 in the example of FIG. 9.

Charger 131 may increase electrical energy (Vbatt) to supply voltage (Vdd) where:

$$2 \times \text{electrical energy (Vbatt)} > \text{supply voltage (Vdd)} > \text{electrical energy (Vbatt)}$$

$$\text{intermediate voltage Va} = 2 \times \text{electrical energy (Vbatt) at Time T1}$$

$$\text{intermediate voltage Va} = \text{electrical energy (Vbatt) at Time T2}$$

Referring to FIGS. 10A and 10B, an exemplary schematic diagram for charger 131 as a boost converter during an upstream mode. A boost converter, also known as a step-up converter, is circuitry that may increase electrical energy (Vbatt) from a lower-level voltage to a supply voltage (Vdd), which is a higher-level voltage, while concurrently decreasing a current associated with the supply voltage (Vdd) to an amount less than a current associated with electrical energy (Vbatt). Controller 121 may output, onto signal lines S1-S12, signaling that configures each of the three converters of FIGS. 6A and 6B in a reverse mode as a boost converter. For example, signaling on signal lines S1-S4 may configure the first of the three converters as a first boost converter, signaling on signal lines S5-S8 may configure the second of the three converters as a second boost converter, and signaling on signal lines S9-S12 may configure the third of the three converters as a third boost converter.

In the examples of FIGS. 4A-4B, 5A-5C, 6A-6B, 8A-8B, 9 and 10A-10B, charger 131 may manage electrical energy (Vbatt) that is stored in energy storage device 141 as the power source for supply voltage (Vdd) during the upstream mode. In response to managing the electrical energy (Vbatt) that is stored in energy storage device 141, charger 131 may convert electrical energy (Vbatt) into the supply voltage (Vdd) and output supply voltage (Vdd) to voltage regulator 104.

Controller 121 may configure voltage regulator 104 as a power switch while device 100 serves as the power source for upstream power. In response to configured as a power switch, voltage regulator 104 may flow supply voltage (Vdd) to bidirectional converter 102 in the form of voltage V(tx).

Also during the upstream mode, controller 121 may cause current regulator 103 to function as a current meter that samples the current (I-sns) flowing through resistor Rsns. Based on the result of sampling the current (I-sns), current regulator 103 may flow a requisite amount of current to ground. The requisite amount during the upstream mode is an amount of current sufficient to reduce or eliminate noise on voltage V(tx).

Bidirectional converter 102 may transform voltage V(tx) into upstream power. Upon transforming voltage V(tx) into the upstream power, bidirectional converter 102 may output the upstream power to external apparatus 710 that is connected to bidirectional converter 102 by wire or wirelessly.

FIG. 11 illustrates a comparative charger arrangement 110 that includes converter 111, flying capacitor C112, inductor L113 and shunt capacitor C114. Converter 111 may be configured as either a buck converter or a boost converter. A buck converter, also known as a step-down converter, is circuitry that reduces a higher-level voltage to a lower-level voltage while concurrently increasing the current of the lower-level voltage to an amount greater than a current associated with the higher-level voltage. Reducing the higher-level voltage to the lower-level voltage may impact the power conversion efficiency. A boost converter, also known as a step-up converter, is circuitry that may increase a lower-level voltage to a higher-level voltage while concurrently increasing the current of the higher-level voltage to an amount less than a current associated with the lower-level voltage.

In the comparative charger arrangement 110, an inductive switching element such as inductor L113 could be found at the output of converter 111. In contrast with the inductive switching element being at an output of converter 111 as illustrated in the comparative arrangement of FIG. 11, it may be advantageous for the inductive switching element being at the input of a converter, as illustrated by inductor L213 in FIGS. 4A-4B, 5A-5C and 8A-8B. Specifically, inductor L213 is at the input of capacitive converter 212, as illustrated in the examples of FIGS. 4A-4B, 5A-5C and 8A-8B. Inductor L213 being at the input of capacitive converter 212 may reduce some of the power losses in an inductive switching element due to ripple current effects and other factors that may exist in the comparative charger arrangement 110 of FIG. 11. The topology illustrated in the example of FIGS. 4A-4B, 5A-5C, 6A-6B, 8A-8B, 9 and 10A-10B may, by reducing the peak-to-peak ripple current and the root-mean-square (RMS) current, result in improved efficiency during power conversion. Those skilled in the art will also appreciate a benefit occurring from the improved efficiency during power conversion is an improved electronic device.

Certain operations of methods according to the technology, or of systems executing those methods, may be represented schematically in the figures or otherwise discussed herein. Unless otherwise specified or limited, representation in the figures of particular operations in particular spatial order may not necessarily require those operations to be executed in a particular sequence corresponding to the particular spatial order. Correspondingly, certain operations represented in the figures, or otherwise disclosed herein, may be executed in different orders than are expressly illustrated or described, as appropriate for particular examples of the technology. Further, in some examples, certain operations may be executed in parallel or partially in parallel, including by dedicated parallel processing devices, or separate computing devices configured to interoperate as part of a large system.

As used herein, unless otherwise limited or defined, "or" indicates a non-exclusive list of components or operations that may be present in any variety of combinations, rather than an exclusive list of components that may be present only as alternatives to each other. For example, a list of "A, B, or C" indicates options of: A; B; C; A and B; A and C; B and C; and A, B, and C.

Correspondingly, the term "or" as used herein is intended to indicate exclusive alternatives only in response to preceded by terms of exclusivity, such as, e.g., "either," "only one of," or "exactly one of." Further, a list preceded by "one or more" (and variations thereon) and including "or" to separate listed elements indicates options of one or more of any or all of the listed elements.

For example, the phrases "one or more of A, B, or C" and "at least one of A, B, or C" indicate options of: one or more A; one or more B; one or more C; one or more A and one or more B; one or more B and one or more C; one or more A and one or more C; and one or more of each of A, B, and C.

Similarly, a list preceded by "a plurality of" (and variations thereon) and including "or" to separate listed elements indicates options of multiple instances of any or all of the listed elements. For example, the phrases "a plurality of A, B, or C" and "two or more of A, B, or C" indicate options of: A and B; B and C; A and C; and A, B, and C.

In general, the term "or" as used herein only indicates exclusive alternatives (e.g., "one or the other but not both") in response to preceded by terms of exclusivity, such as, e.g., "either," "only one of," or "exactly one of."

Any mark, if referenced herein, may be common law or registered trademarks of third parties affiliated or unaffiliated with the applicant or the assignee. Use of these marks is by way of example and shall not be construed as descriptive or to limit the scope of disclosed or claimed embodiments to material associated only with such marks.

The articles "a,″ "an," and "the" are intended to include the plural forms as well, unless the context clearly indicates otherwise.

The terms "comprises," "includes," and "has" specify the presence of stated features, numbers, operations, members, elements, and/or combinations thereof, but do not preclude the presence or addition of one or more other features, numbers, operations, members, elements, and/or combinations thereof.

Throughout the application, ordinal numbers (e.g., first, second, third, etc.) may be used as an adjective for an element (i.e., any noun in the application).

Although terms such as "first," "second," and "third" may be used herein to describe various members, components, regions, layers, or sections, these members, components, regions, layers, or sections are not to be limited by these terms.

Rather, these terms are only used to distinguish one member, component, region, layer, or section from another member, component, region, layer, or section.

The use of ordinal numbers is not to imply or create any particular ordering of the elements nor to limit any element to being only a single element unless expressly disclosed, such as by the use of the terms "before," "after," "single," and other such terminology. Rather, the use of ordinal numbers is to distinguish between the elements.

By way of an example, a first element is distinct from a second element, and the first element may encompass more than one element and succeed (or precede) the second element in an ordering of elements.

Thus, a first member, component, region, layer, or section referred to in examples described herein may also be referred to as a second member, component, region, layer, or section without departing from the teachings of the examples.

Those skilled in the art will also appreciate the arrangement or interconnection of components such as "coupled," "connected," "on," "under," or similar wording allows for indirect connections, or intervening components or layers.

## Claims

**1.** A device comprising:

a supply-side converter configured to:

adjust, in response to receiving an input voltage from a power source, the input voltage from a source level to an intermediate level, and
output, into an inductor in response to adjusting the input voltage, the input voltage as an intermediate voltage; and

a load-side converter configured to:

adjust, in response to receiving the intermediate voltage from the inductor, the intermediate voltage from the intermediate level to a load voltage level, and
output, to a power load in response to adjusting the intermediate voltage, the intermediate voltage as a load voltage.

**2.** The device according to claim 1, wherein a voltage level of the load voltage level differs from the intermediate level, and/or

wherein a voltage level of the intermediate level differs from the source level, and/or
wherein a voltage level of the source level differs from the load voltage level.

**3.** The device according to claim 1 or 2, wherein the load voltage level is lower than the intermediate level in response to the intermediate level is lower than the source level, or
wherein the load voltage level is higher than the intermediate level in response to the intermediate level is higher than the source level.

**4.** The device according to one of the preceding claims, wherein the supply-side converter is an inductive converter in response to the load-side converter is a capacitive converter.

**5.** The device according to one of the claims 1 to 3, wherein the supply-side converter is a buck converter in response to the load-side converter being a buck converter.

**6.** The device according to one of the claims 1 to 3, wherein the supply-side converter is a boost converter in response to the load-side converter being a boost converter.

**7.** The device according to one of the preceding claims, further comprising:
an energy storage device configured to store the input voltage, the power source is the energy storage device.

**8.** The device according to one of the preceding claims, further comprising:
a voltage regulator configured to convert a rectified voltage into the input voltage, the power source is the voltage regulator.

**9.** The device according to claim 8, further comprising:
a converter configured to transform, in response to rectifying downstream power, the downstream power into the rectified voltage.

**10.** The device according to one of the preceding claims, wherein the supply-side converter is a converter from the group consisting of an inductive converter and a capacitive converter.

**11.** The device according to claim 10, wherein the inductive converter is a converter from the group consisting of a buck converter and a boost converter.

**12.** The device according to claim 10 or 11, wherein the capacitive converter is a converter from the group consisting of a buck converter and a boost converter.

**13.** The device according to one of the preceding claims, wherein the load-side converter is a converter from the group consisting of an inductive converter and a capacitive converter.

**14.** A system comprising:

a device configured to:

adjust, in response to receiving an input voltage from a power source, the input voltage from a source level to an intermediate level,
output, into an inductor in response to adjusting the input voltage, the input voltage as an intermediate voltage,
adjust, in response to receiving the intermediate voltage from the inductor, the intermediate voltage from the intermediate level to a load voltage level, and
output, to a power load in response to adjusting the intermediate voltage, the intermediate voltage as a load voltage; and

an external apparatus configured to:

output, in response to the external apparatus is the power source, the input voltage to the device, and
receive, in response to the external apparatus is the power load, the load voltage from the device.

**15.** The system according to claim 14, wherein the device comprises:

an inductive converter configured to adjust the input voltage from the source level to the intermediate level, and
a capacitive converter configured to adjust the intermediate voltage from the intermediate level to the load voltage

level.

FIG. 1

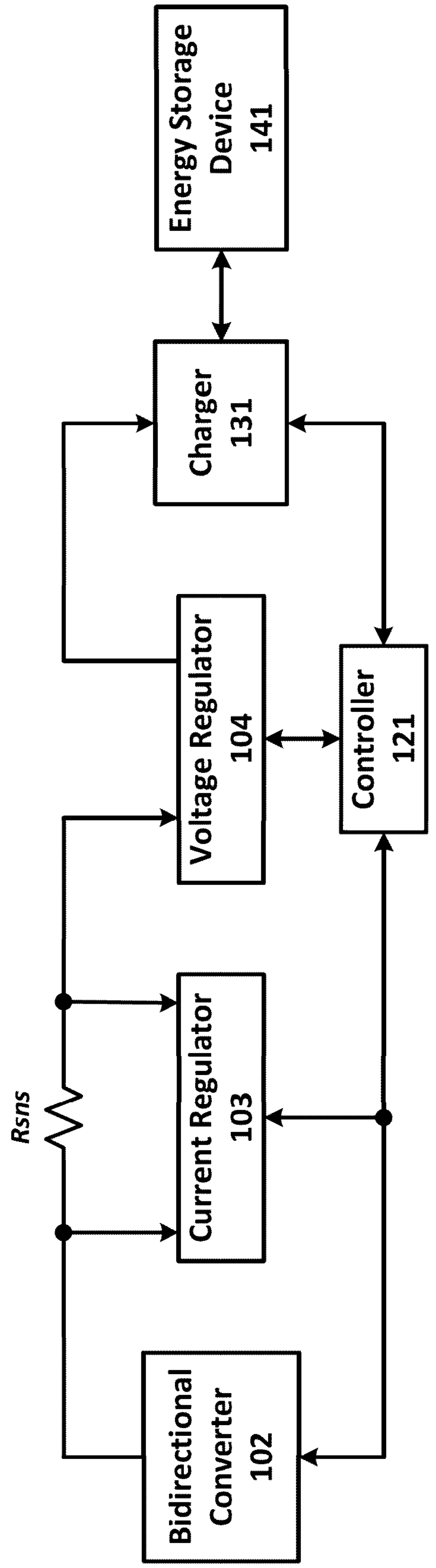


Device 100

FIG. 2

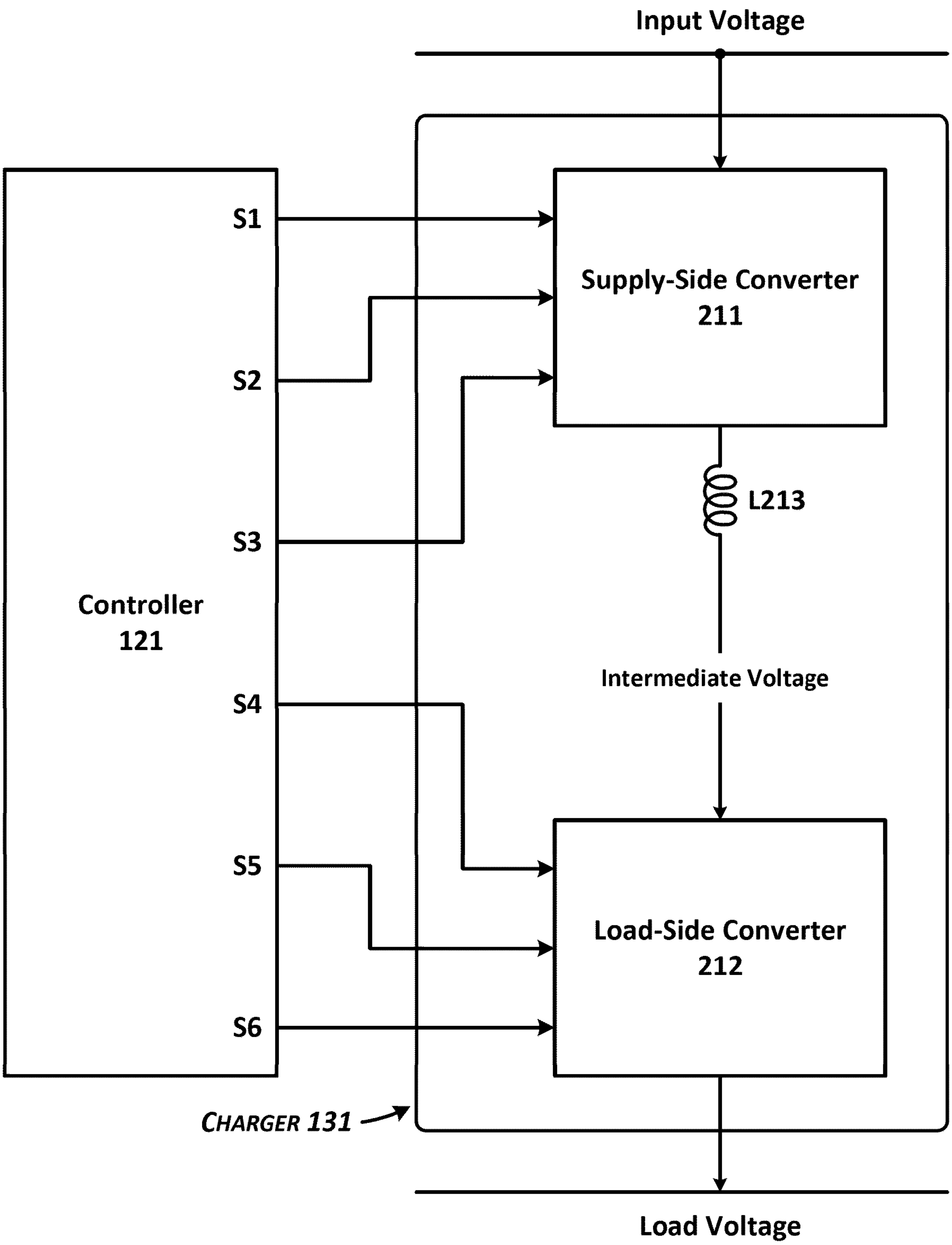
Input Voltage
S1
S2
S3
S4
S5
S6
Controller
121
Supply-Side Converter
211
L213
Intermediate Voltage
Load-Side Converter
212
CHARGER 131
Load Voltage

# FIG. 3 – Downstream Mode

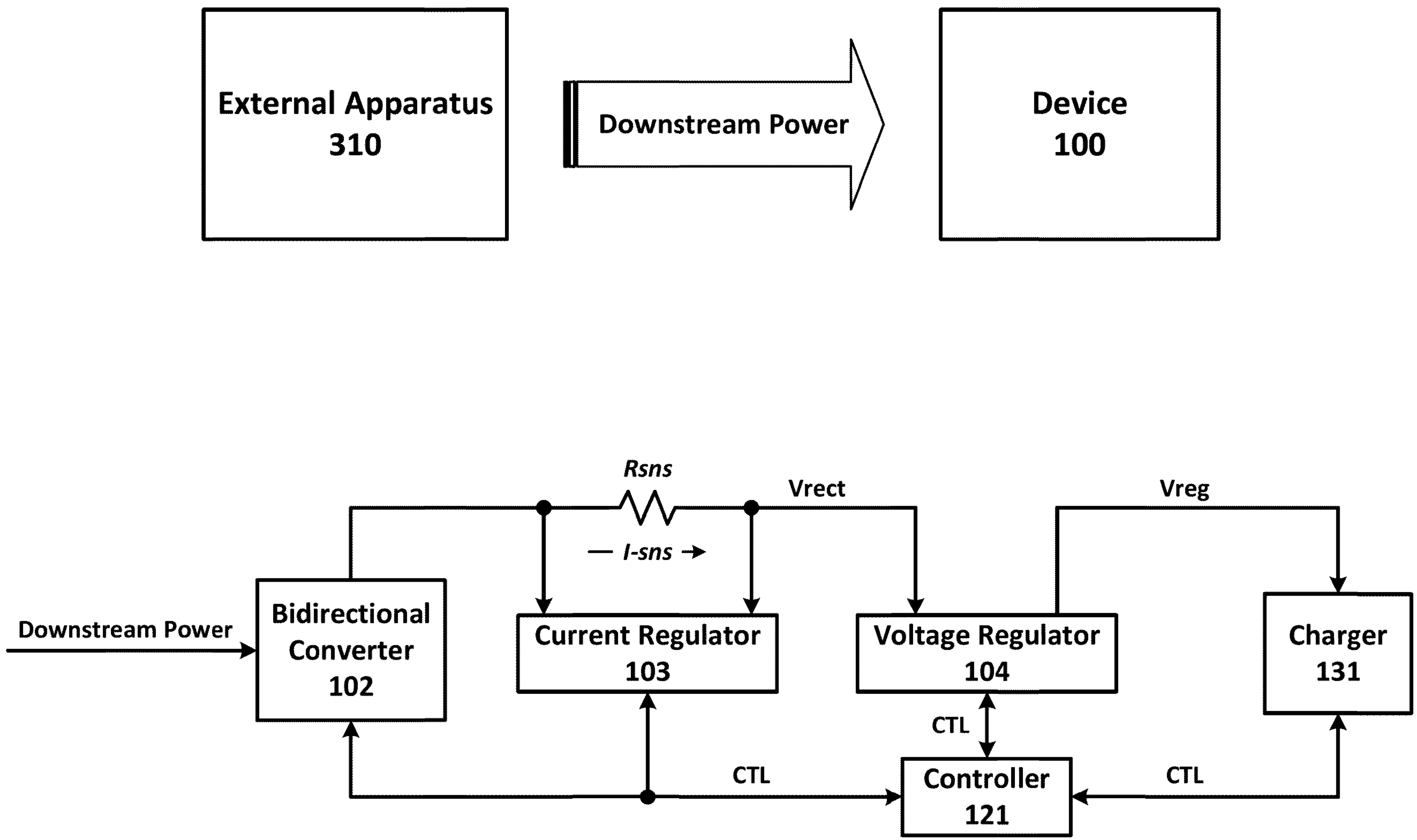

FIG. 4A

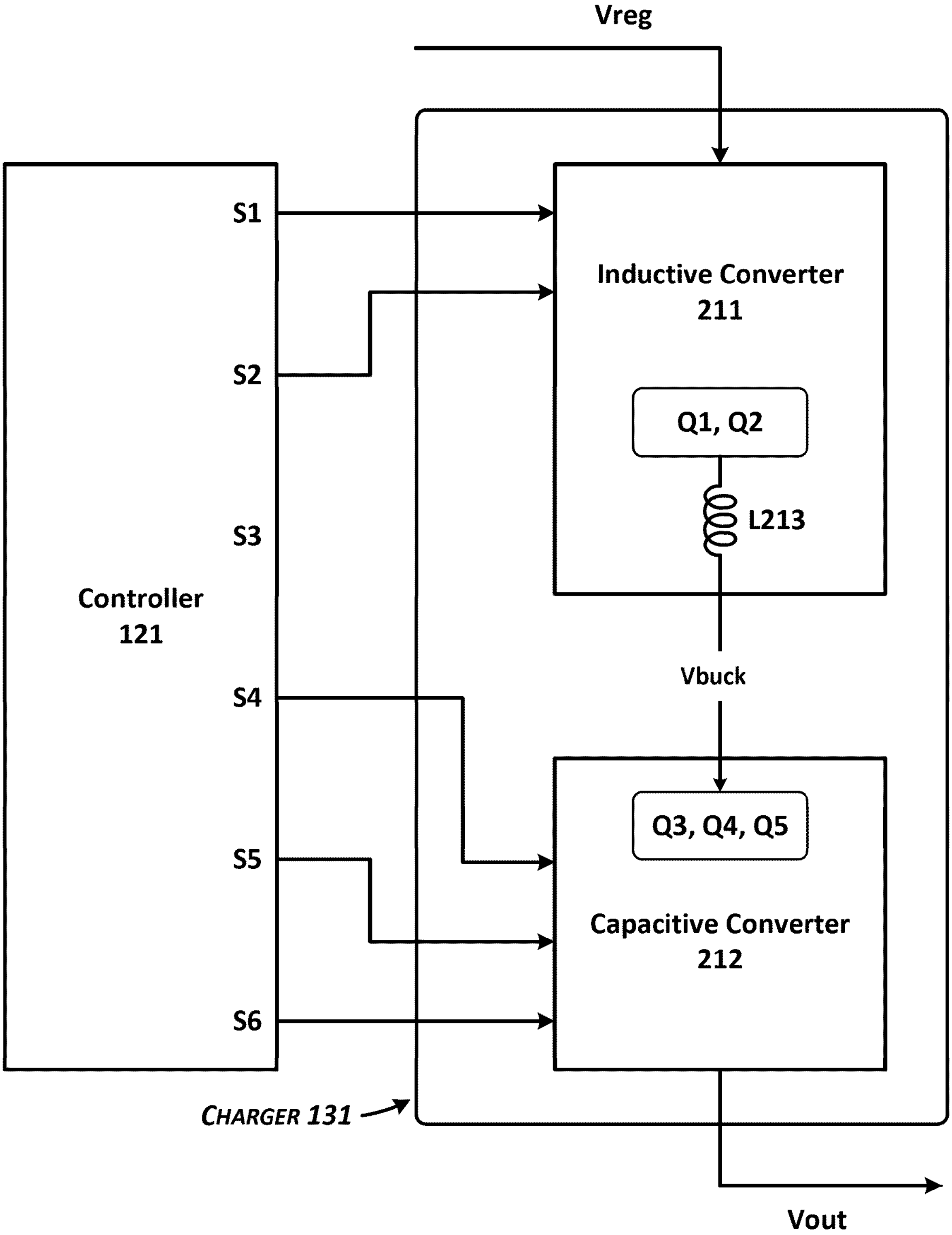
Vreg
S1
S2
S3
S4
S5
S6
Controller
121
Inductive Converter
211
Q1, Q2
L213
Vbuck
Q3, Q4, Q5
Capacitive Converter
212
CHARGER 131
Vout

FIG. 4B

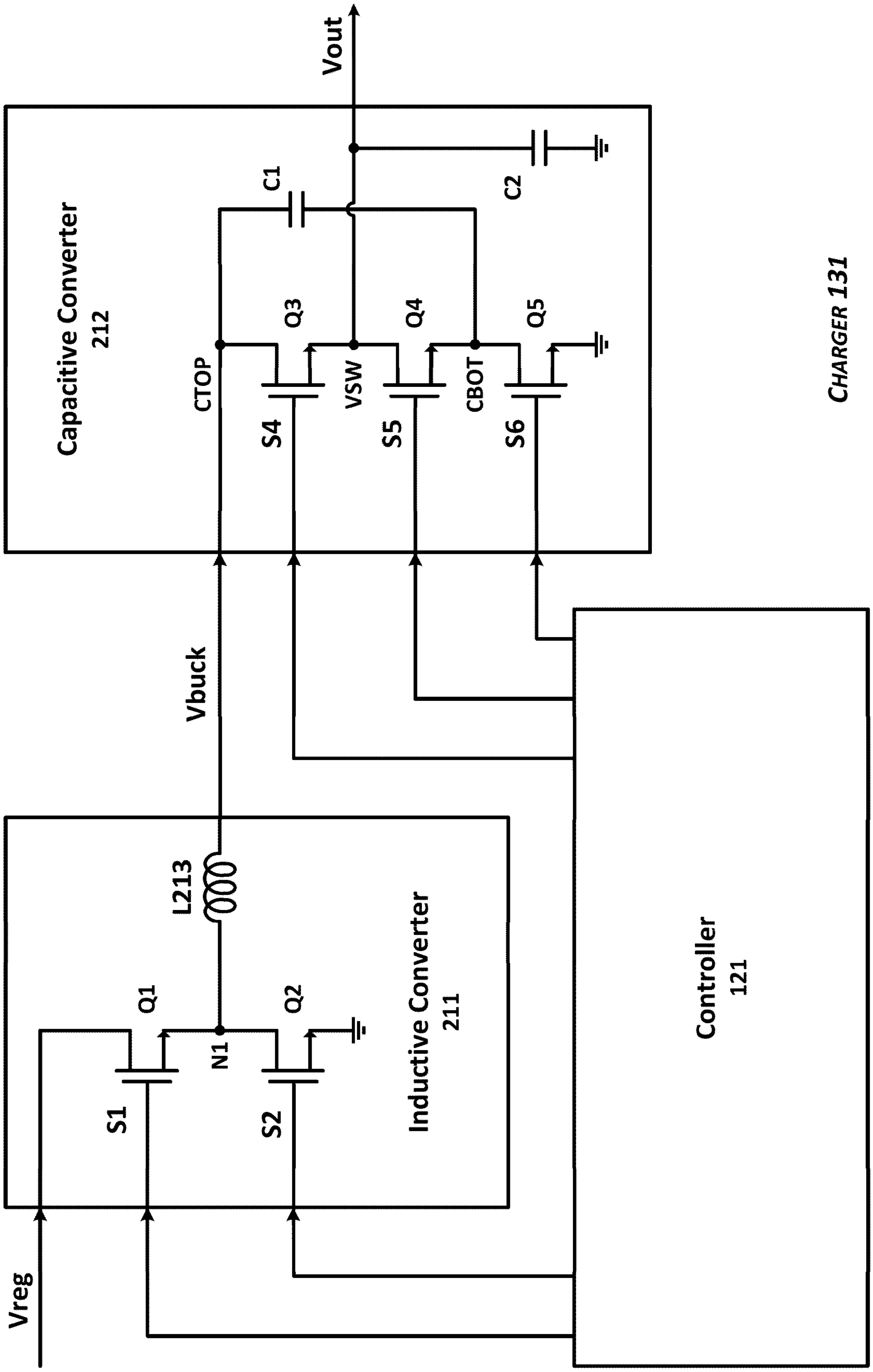
Vout
Capacitive Converter
212
C1
C2
CTOP
VSW
CBOT
Q3
Q4
Q5
S4
S5
S6
Vbuck
L213
Inductive Converter
211
Q1
Q2
N1
S1
S2
Vreg
Controller
121
CHARGER 131

FIG. 5A

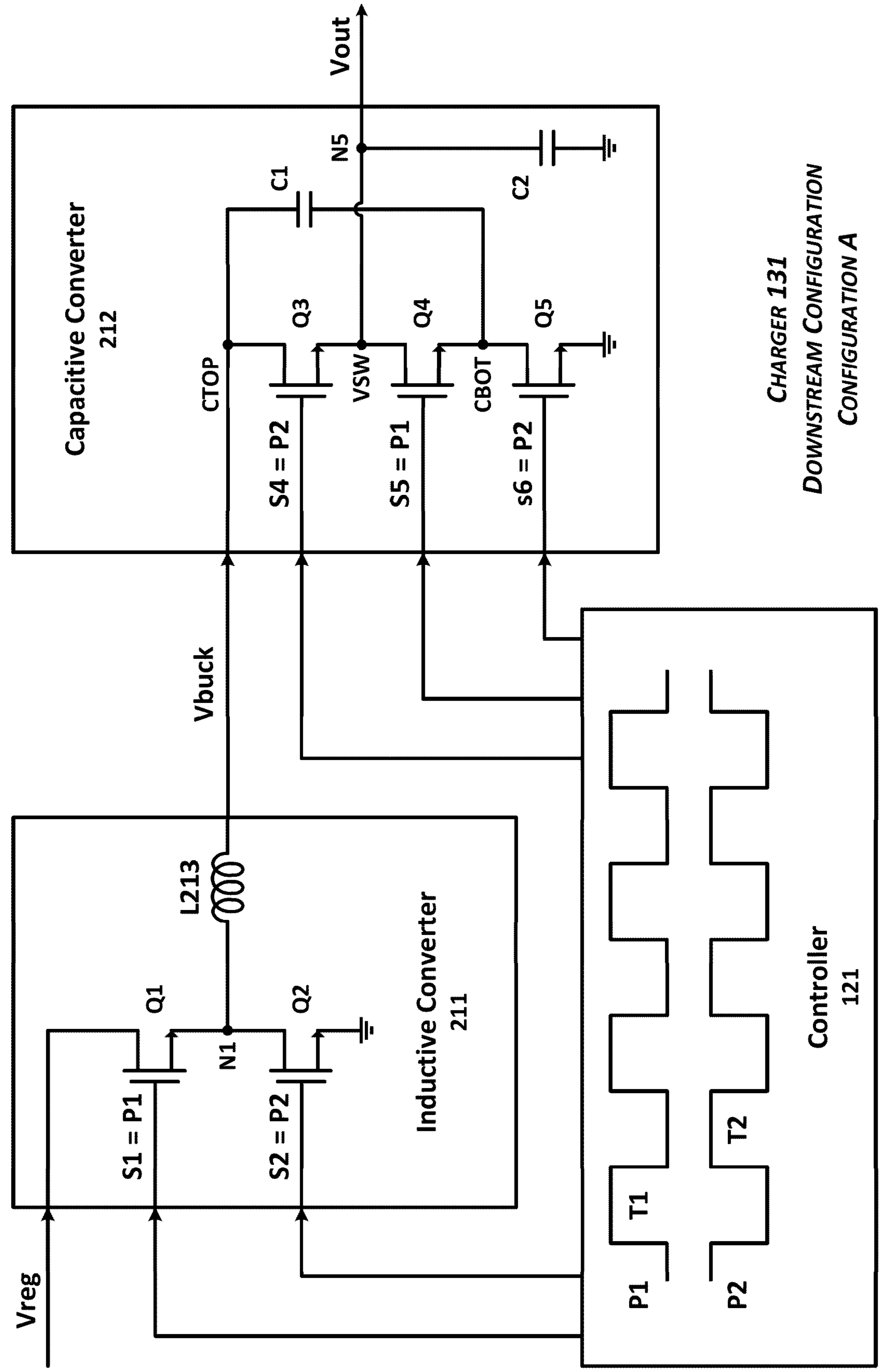
Vout
Capacitive Converter
212
N5
C1
C2
CTOP
Q3
VSW
Q4
CBOT
Q5
S4 = P2
S5 = P1
s6 = P2
CHARGER 131
DOWNSTREAM CONFIGURATION
CONFIGURATION A
Vbuck
L213
Q1
Q2
N1
Inductive Converter
211
S1 = P1
S2 = P2
Vreg
T1
T2
P1
P2
Controller
121

FIG. 5B

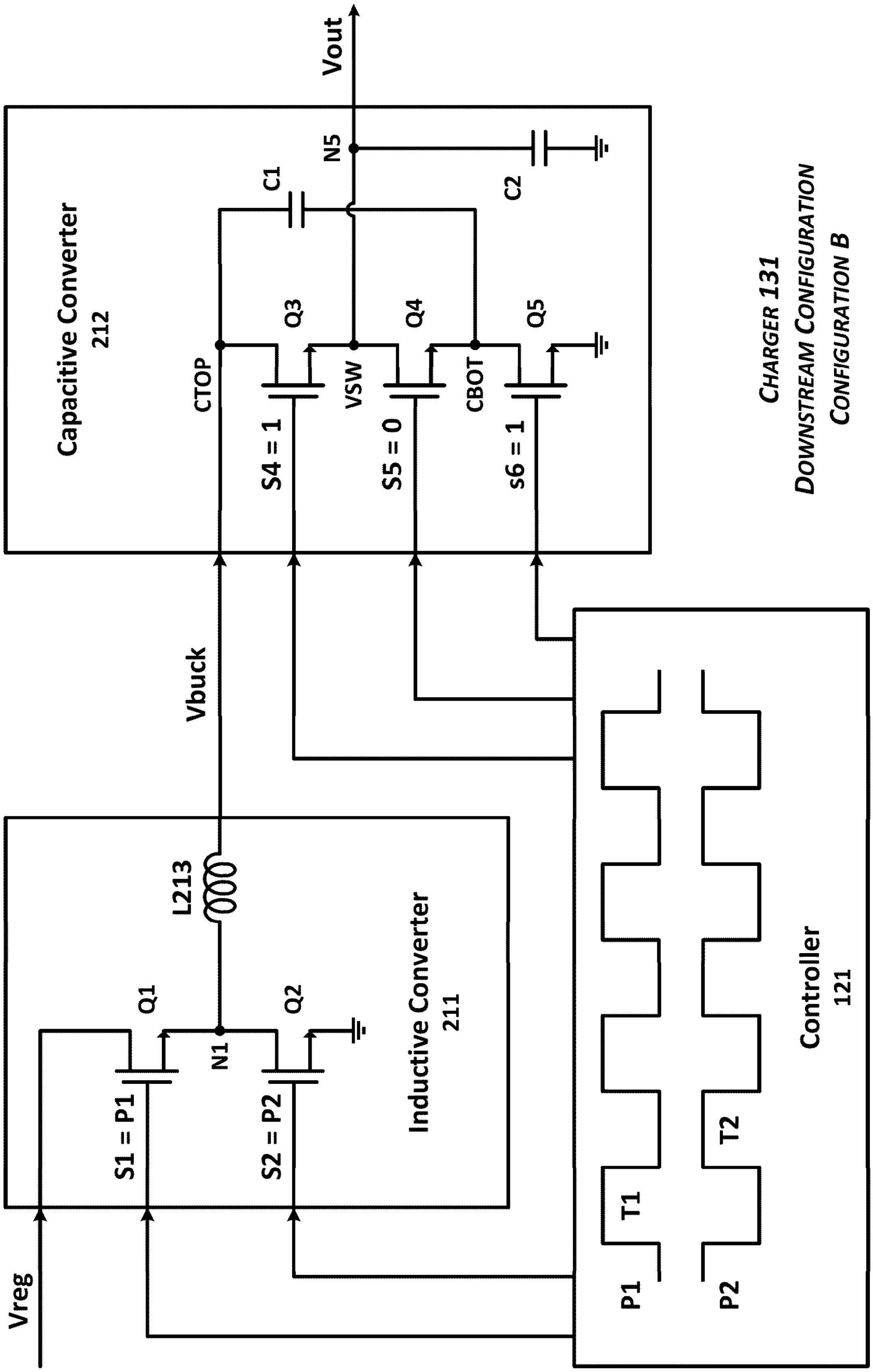
Vreg
S1 = P1
S2 = P2
Q1
Q2
N1
L213
Inductive Converter
211
Vbuck
Capacitive Converter
212
CTOP
VSW
CBOT
S4 = 1
S5 = 0
s6 = 1
Q3
Q4
Q5
C1
C2
N5
Vout
Controller
121
P1
P2
T1
T2
Charger 131
Downstream Configuration
Configuration B

FIG. 5C

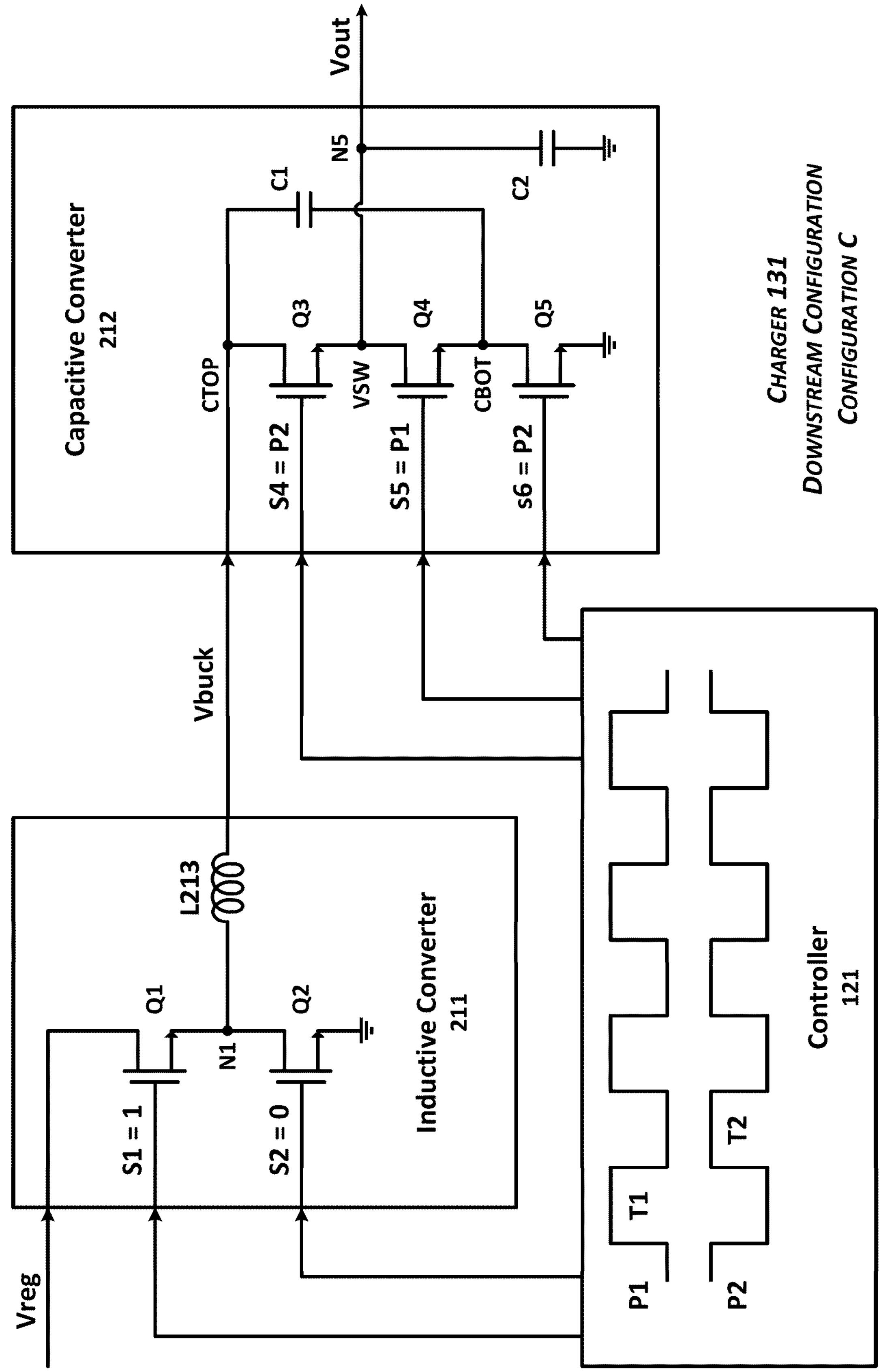
Vreg
S1 = 1
S2 = 0
Q1
Q2
N1
L213
Inductive Converter
211
Vbuck
CTOP
VSW
CBOT
Q3
Q4
Q5
C1
C2
N5
Vout
S4 = P2
S5 = P1
s6 = P2
Capacitive Converter
212
P1
P2
T1
T2
Controller
121
CHARGER 131
DOWNSTREAM CONFIGURATION
CONFIGURATION C

# FIG. 6A

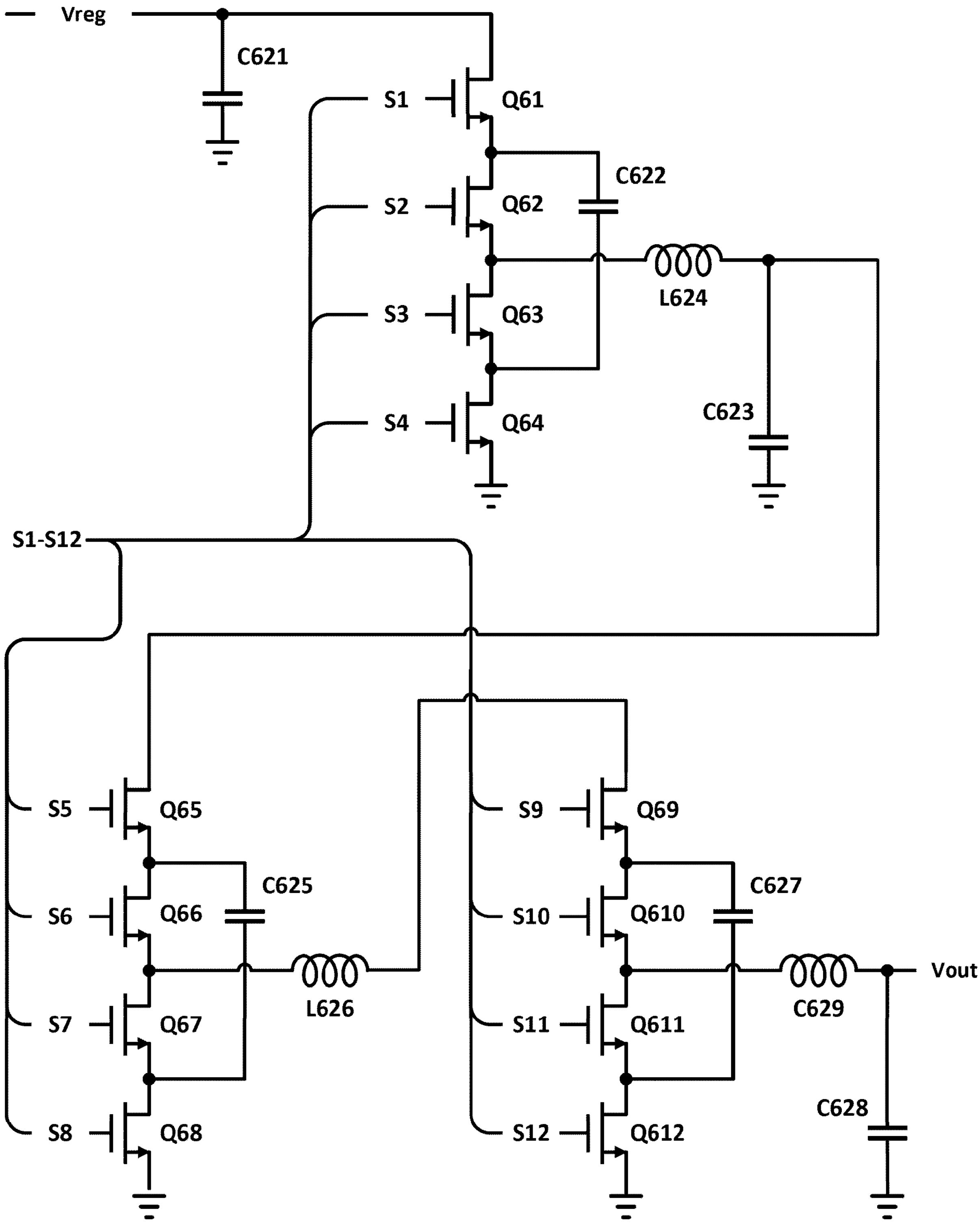
Vreg
C621
S1
Q61
C622
S2
Q62
L624
S3
Q63
C623
S4
Q64
S1-S12
S5
Q65
C625
S6
Q66
L626
S7
Q67
S8
Q68
S9
Q69
C627
S10
Q610
Vout
C629
S11
Q611
C628
S12
Q612

# FIG. 6B

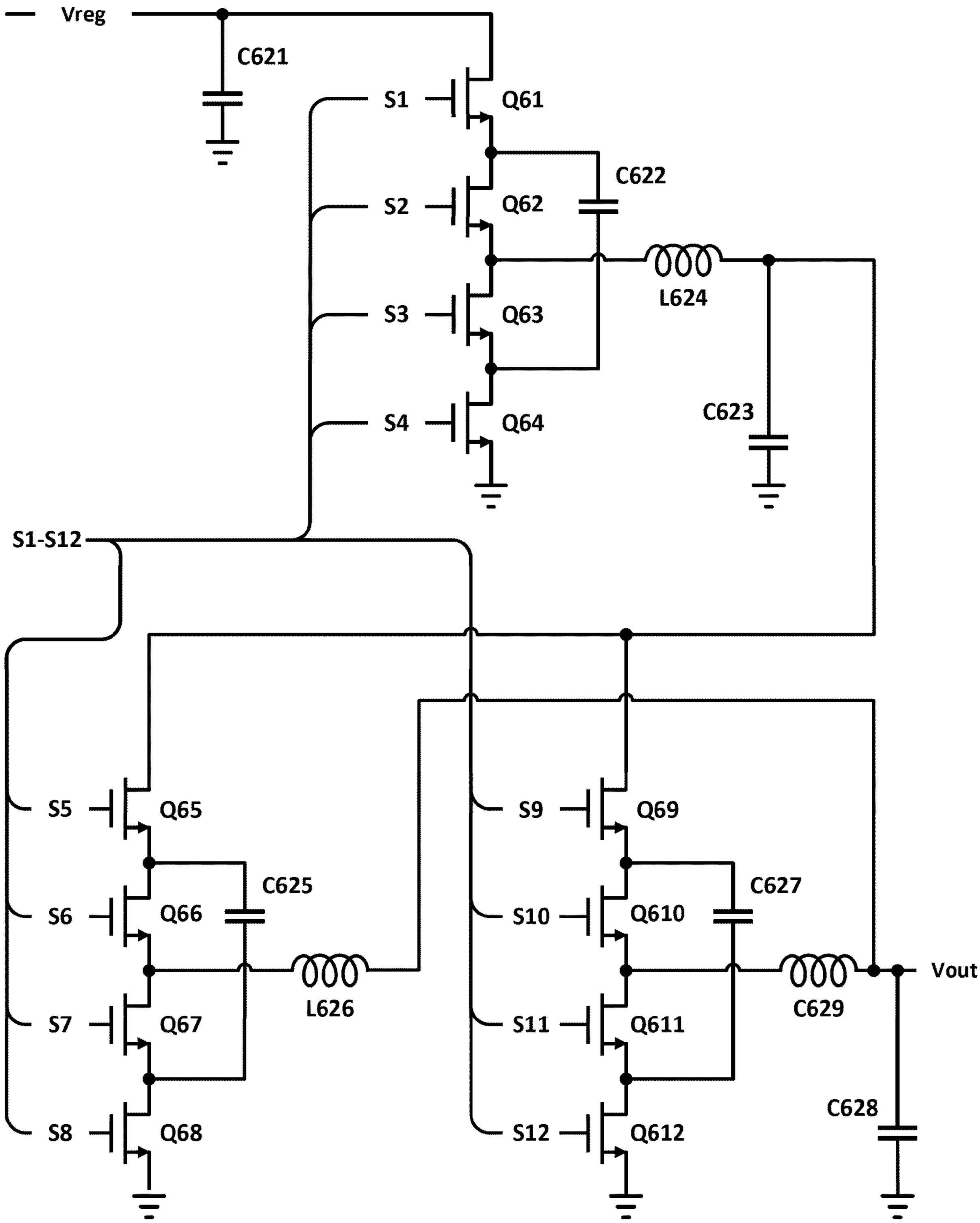
Vreg
C621
S1
Q61
C622
S2
Q62
L624
S3
Q63
C623
S4
Q64
S1-S12
S5
Q65
C625
S6
Q66
L626
S7
Q67
S8
Q68
S9
Q69
C627
S10
Q610
C629
Vout
S11
Q611
C628
S12
Q612

FIG. 7 – Upstream Mode

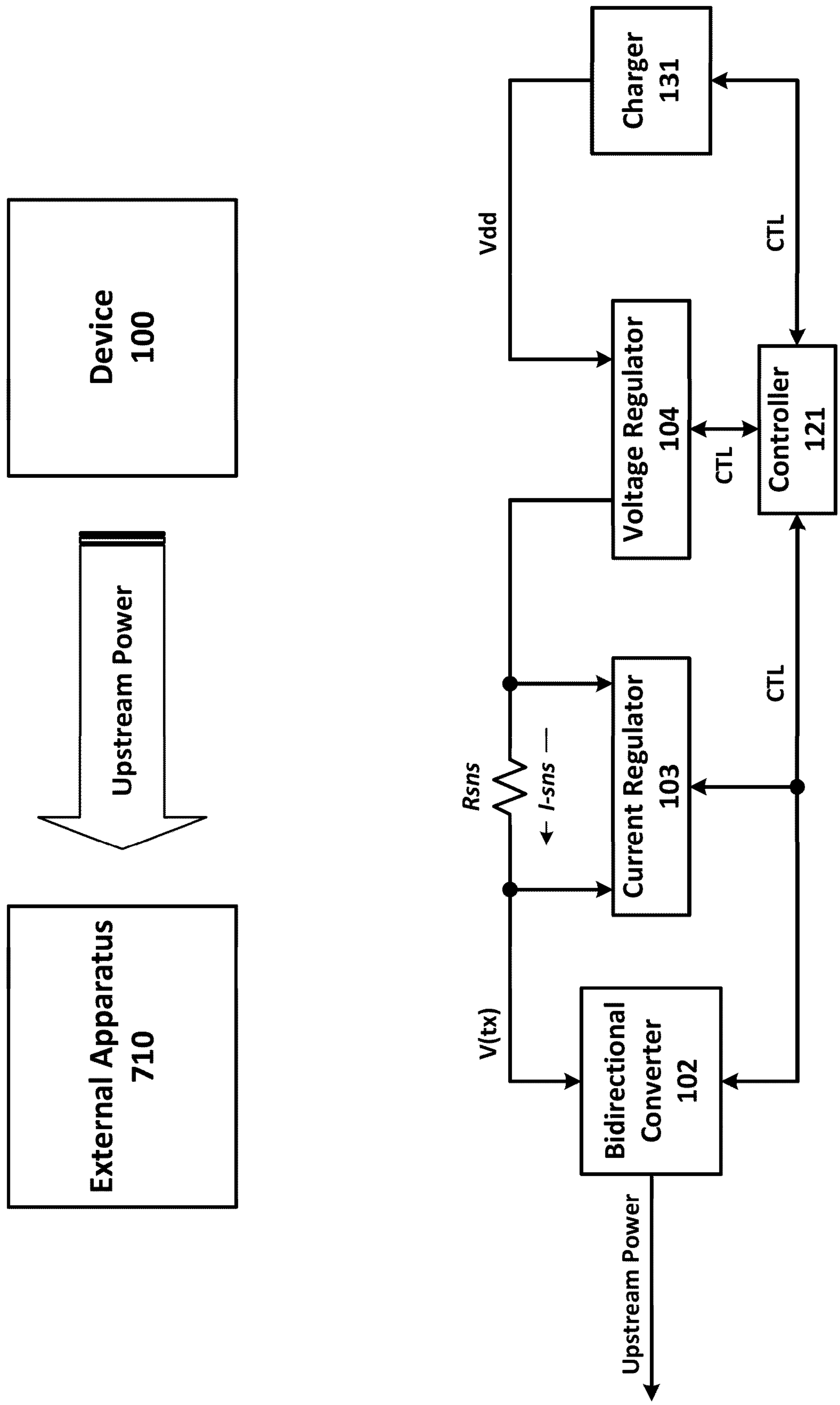

FIG. 8A

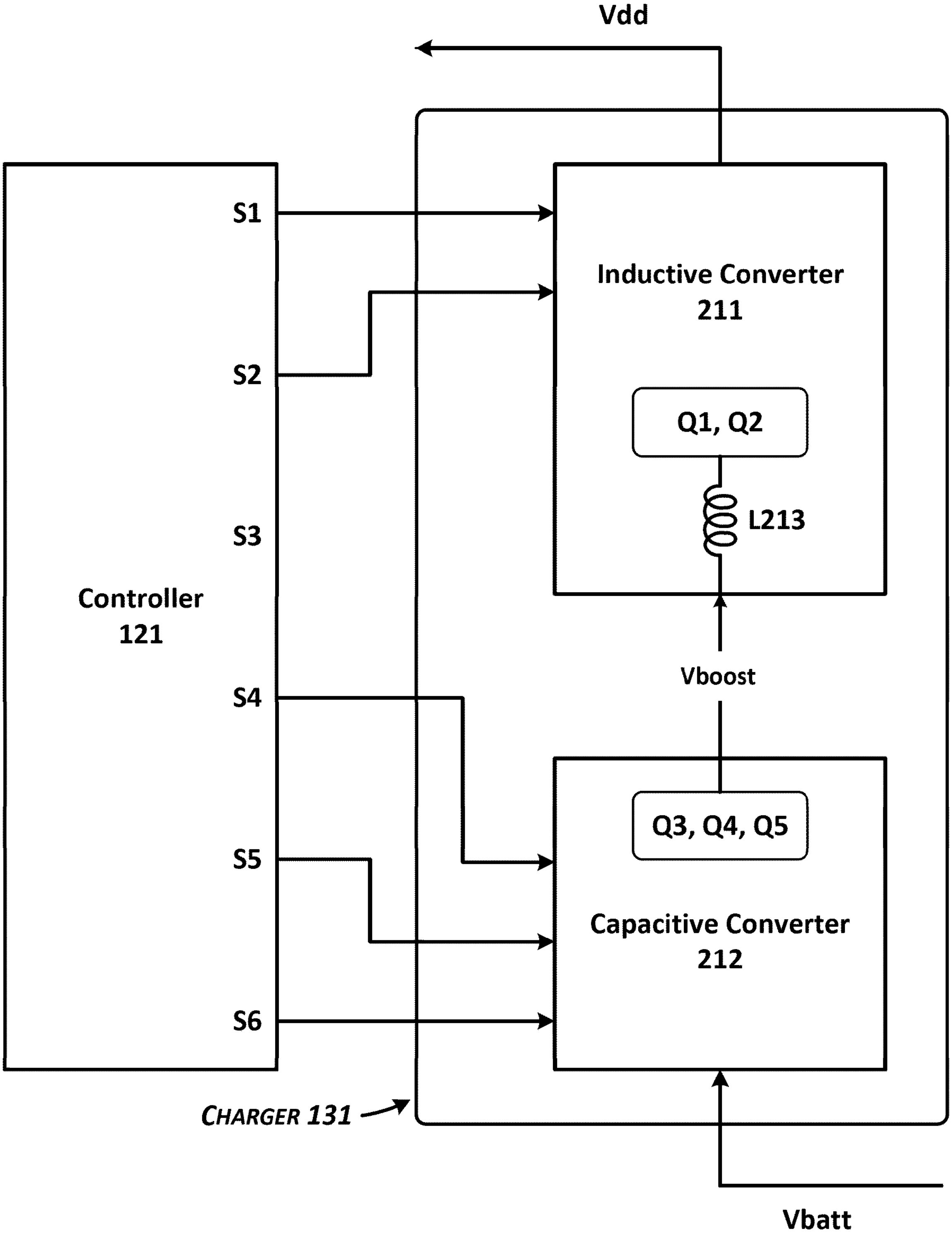
Vdd
S1
S2
S3
S4
S5
S6
Controller
121
Inductive Converter
211
Q1, Q2
L213
Vboost
Q3, Q4, Q5
Capacitive Converter
212
CHARGER 131
Vbatt

FIG. 8B

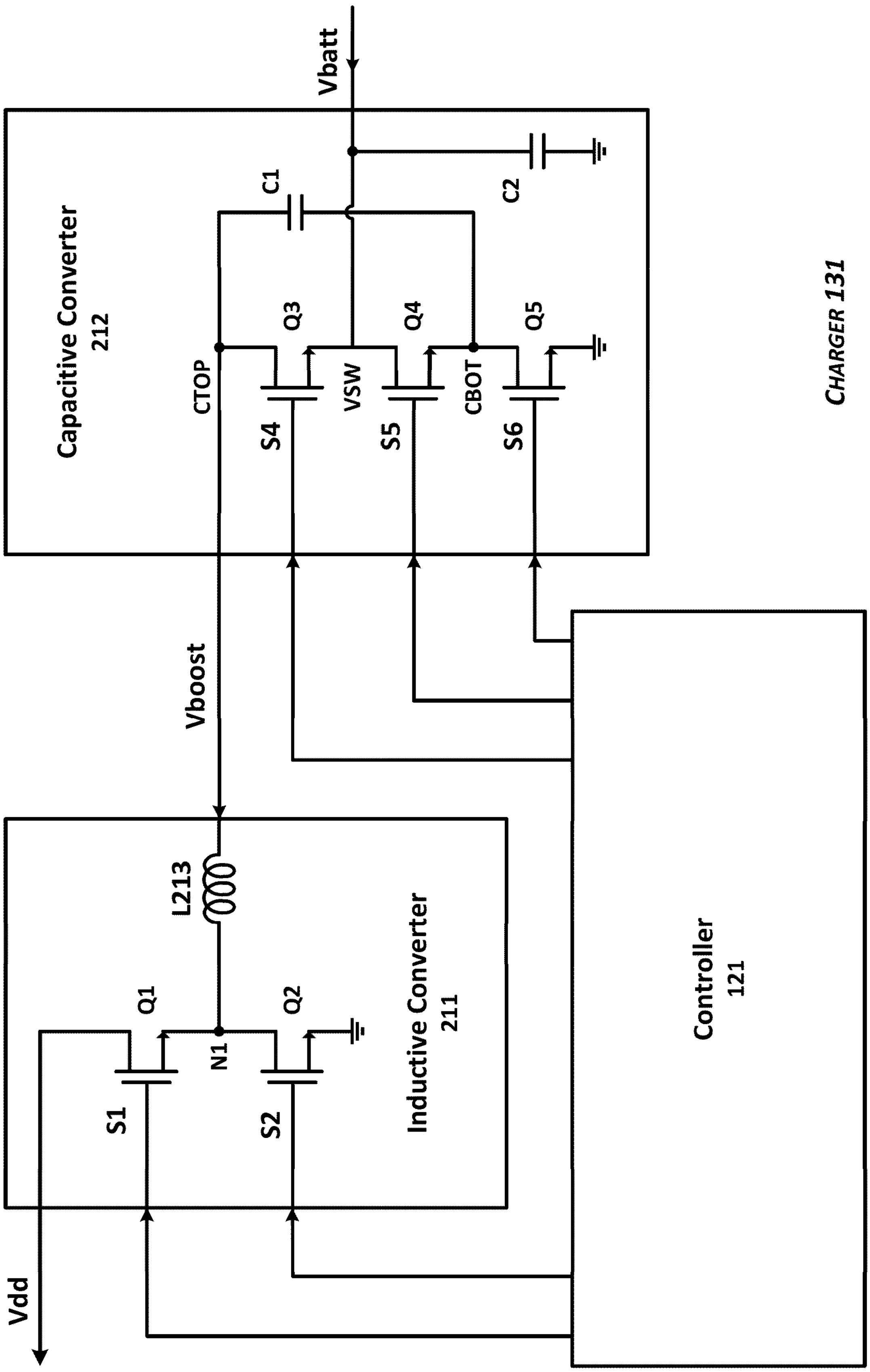
Vbatt
Capacitive Converter
212
C1
C2
CTOP
VSW
CBOT
Q3
Q4
Q5
S4
S5
S6
CHARGER 131
Vboost
L213
Inductive Converter
211
Q1
Q2
N1
S1
S2
Vdd
Controller
121

FIG. 9

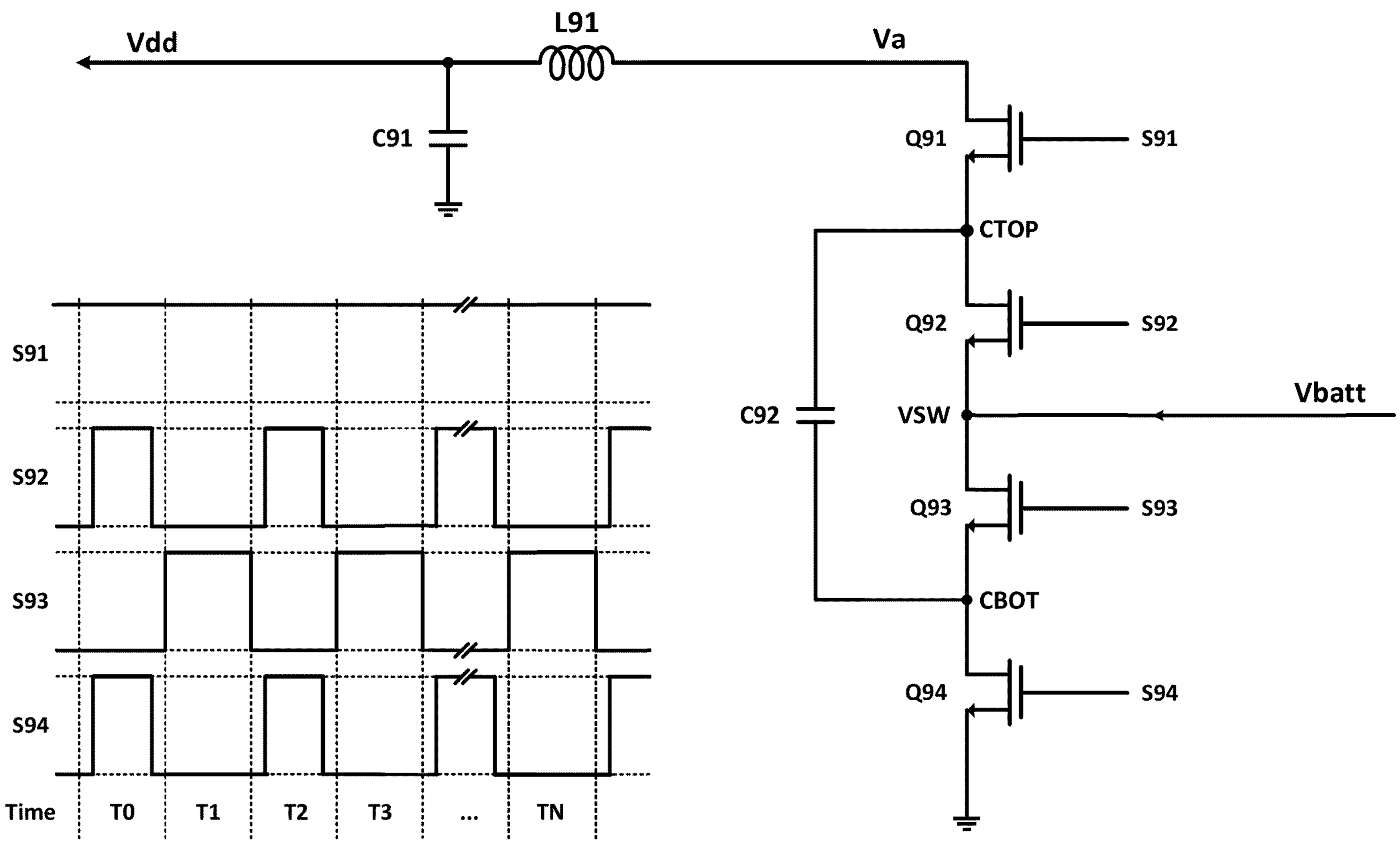
Vdd
L91
Va
C91
Q91
S91
CTOP
Q92
S92
C92
VSW
Vbatt
Q93
S93
CBOT
Q94
S94
S91
S92
S93
S94
Time
T0
T1
T2
T3
...
TN

# FIG. 10A

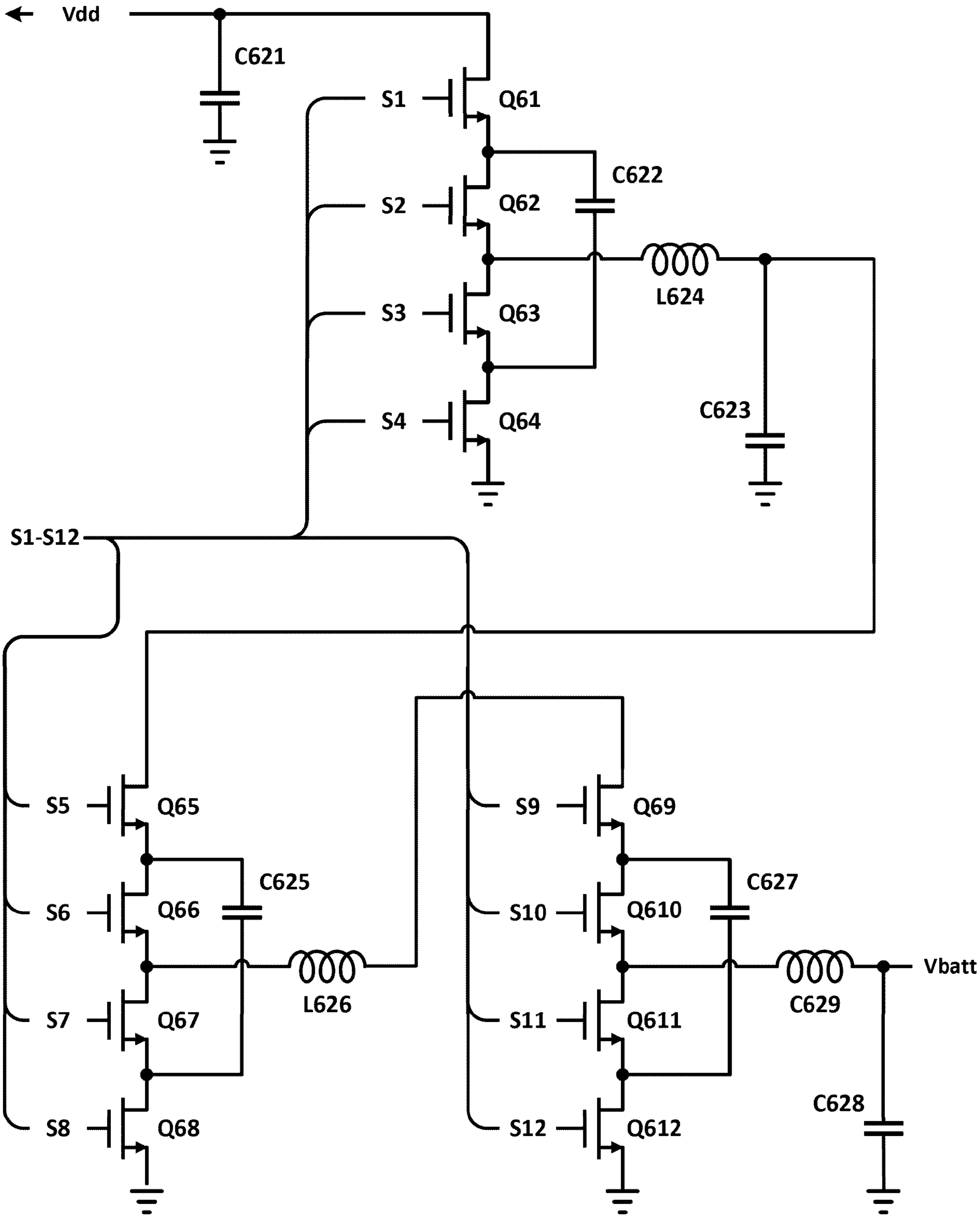
Vdd
C621
S1
Q61
S2
Q62
C622
S3
Q63
L624
S4
Q64
C623
S1-S12
S5
Q65
S6
Q66
C625
S7
Q67
L626
S8
Q68
S9
Q69
S10
Q610
C627
S11
Q611
C629
Vbatt
S12
Q612
C628

# FIG. 10B

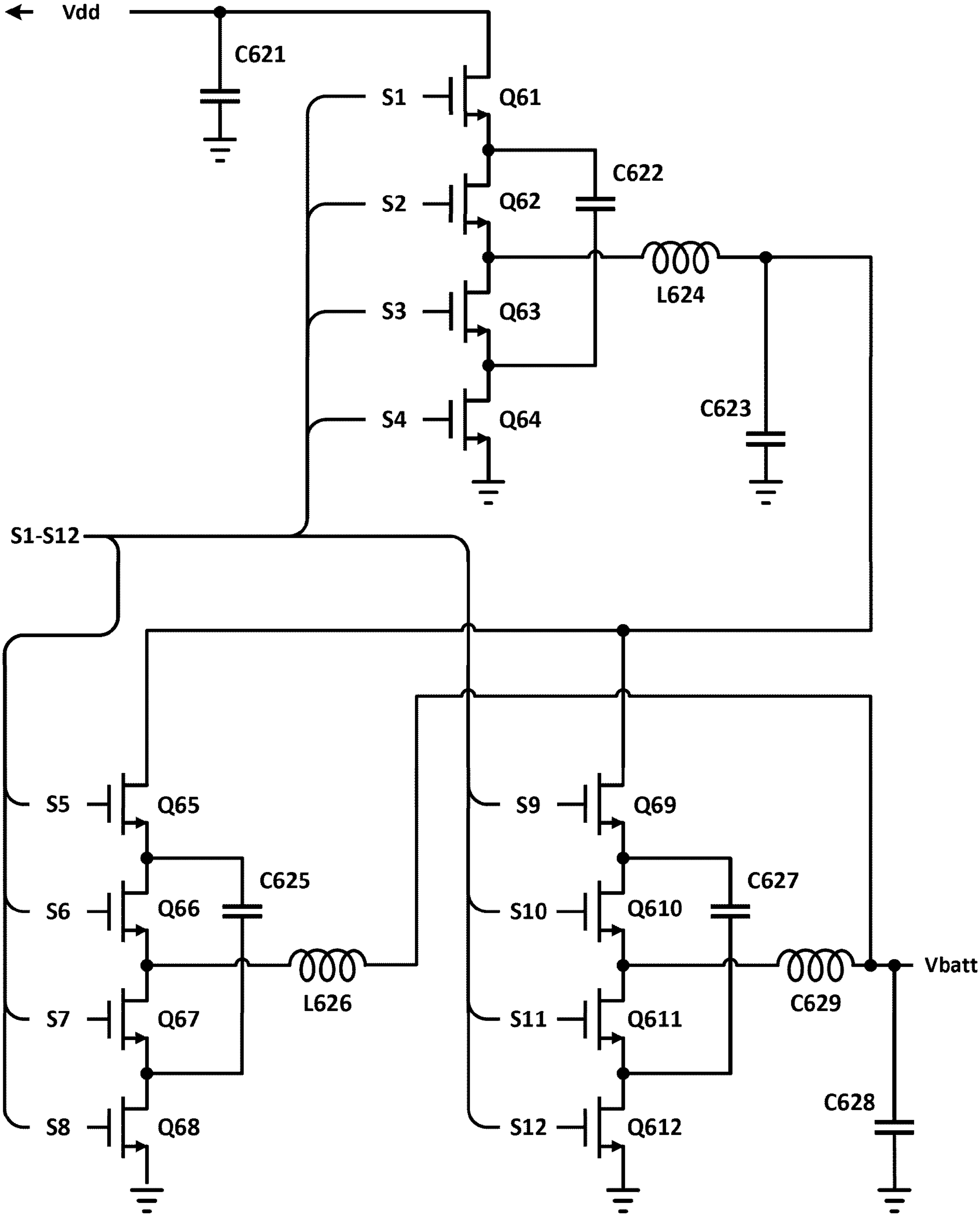
Vdd
C621
S1
Q61
C622
S2
Q62
L624
S3
Q63
C623
S4
Q64
S1-S12
S5
Q65
C625
S6
Q66
L626
S7
Q67
S8
Q68
S9
Q69
C627
S10
Q610
C629
Vbatt
S11
Q611
C628
S12
Q612

FIG. 11

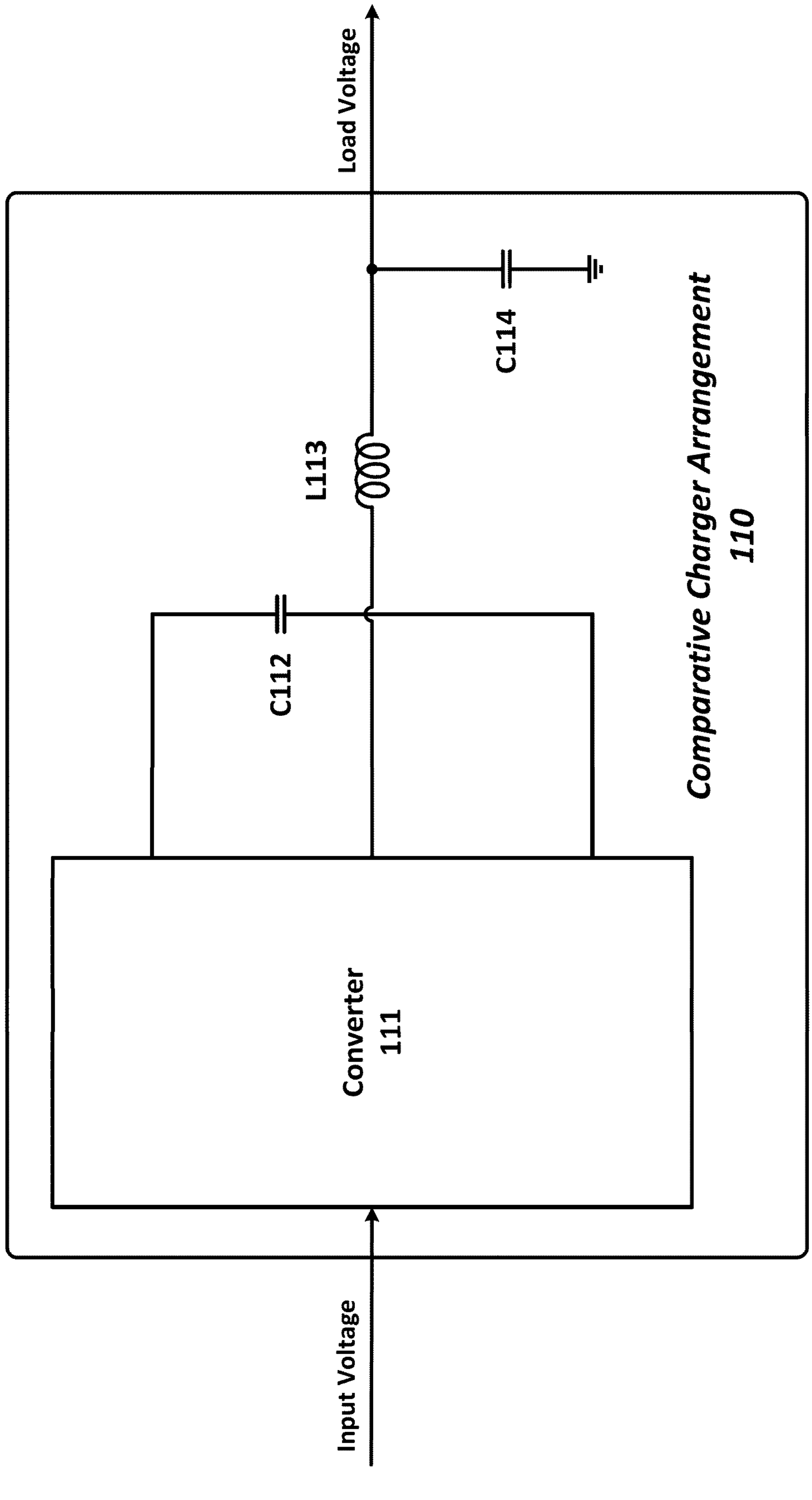
Load Voltage
C114
L113
C112
Comparative Charger Arrangement
110
Converter
111
Input Voltage

Europäisches Patentamt
European Patent Office
Office européen des brevets

# EUROPEAN SEARCH REPORT

Application Number
EP 25 19 5304

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/353054 A1 (HARDY CASEY [US] ET AL) 2 November 2023 (2023-11-02) * paragraph [0056] - paragraph [0067] * * figure 6 * ----- | 1-15 | INV. H02M1/00 H02M3/07 H02M3/158 |
| X | GB 2 555 902 A (CIRRUS LOGIC INT SEMICONDUCTOR LTD [GB]) 16 May 2018 (2018-05-16) * page 6 - page 12 * * figure 12 * ----- | 1-15 | |
| A | US 11 764 669 B2 (UNIV PRINCETON [US]; PSEMI CORP [US]) 19 September 2023 (2023-09-19) * figures 15,23A * ----- | 1-15 | |
| | | | TECHNICAL FIELDS SEARCHED (IPC) |
| | | | H02M |

The present search report has been drawn up for all claims

1

| Place of search | Date of completion of the search | Examiner |
|---|---|---|
| The Hague | 8 January 2026 | Lochhead, Steven |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

# ANNEX TO THE EUROPEAN SEARCH REPORT ON EUROPEAN PATENT APPLICATION NO. EP 25 19 5304

This annex lists the patent family members relating to the patent documents cited in the above-mentioned European search report. The members are as contained in the European Patent Office EDP file on
The European Patent Office is in no way liable for these particulars which are merely given for the purpose of information.

08-01-2026

| Patent document cited in search report | Publication date | Patent family member(s) | Publication date |
|---|---|---|---|
| US 2023353054 A1 | 02-11-2023 | NONE | |
| GB 2555902 A | 16-05-2018 | NONE | |
| US 11764669 B2 | 19-09-2023 | CN 116508250 A | 28-07-2023 |
| | | US 2022103066 A1 | 31-03-2022 |
| | | WO 2022072658 A1 | 07-04-2022 |

EPO FORM P0459

For more details about this annex : see Official Journal of the European Patent Office, No. 12/82